# EUROPÄISCHE PATENTSCHRIFT

(11) **EP 3 168 030 B1**
(45) Veröffentlichungstag und Bekanntmachung des Hinweises auf die Patenterteilung: **29.08.2018**
(21) Anmeldenummer: 16195893.9
(22) Anmeldetag: 27.10.2016
(51) Int. Cl.: B29C 51/26

(54) **VERFAHREN ZUM BETREIBEN EINES THERMOFORMAUTOMATEN UND THERMOFORMAUTOMAT ZUM DURCHFÜHREN DES VERFAHRENS**
METHOD FOR OPERATING A THERMOFORMING DEVICE AND THERMOFORMING DEVICE FOR CARRYING OUT THE METHOD
PROCÉDÉ DE FONCTIONNEMENT D'UN AUTOMATE DE THERMOFORMAGE ET AUTOMATE DE THERMOFORMAGE DESTINÉ À EXÉCUTER LE PROCÉDÉ

(30) Priorität: 13.11.2015 DE 102015222455
(43) Veröffentlichungstag der Anmeldung: 17.05.2017
(73) Patentinhaber: Gabler Thermoform GmbH & Co. KG, 23568 Lübeck (DE)
(72) Erfinder: Grolla, Peter, 23562 Lübeck (DE)
(74) Vertreter: Grosse, Wolf-Dietrich Rüdiger

(56) Entgegenhaltungen:
- DE-C1- 3 405 156
- US-A1- 2009 058 008

## Beschreibung

Die Erfindung betrifft ein Verfahren zum Betreiben eines Thermoformautomaten beim Herstellen von mit Belüftungslöchern versehenen tiefgezogenen, beliebigen schalen- und / oder deckelartigen Verpackungsartikeln aus thermoplastischen Kunststoff-Folien, die zum Formen, Stanzen und Stapeln der Artikel über einen intermittierenden Folientransport einer Formstation sowie sich daran anschließend einer Lochstanzstation und einer Stapelstation, optional mit einer Ausstanzstation zwischen dem Lochstanzen und dem Stapeln, zugeführt werden, wobei in der Formstation ein zum vertikalen Öffnen und Schließen ausgebildetes, aus einem Oberwerkzeug und einem Unterwerkzeug bestehendes Formwerkzeug angeordnet ist, von denen das Unterwerkzeug mit in mindestens zwei Reihen vorgesehenen Formnestern ausgebildet ist. Des Weiteren betrifft die Erfindung einen Thermoformautomat zum Durchführen des Verfahrens.

Solche Thermoformautomaten, die mit einer übergeordneten speicherprogrammierbaren Steuerung verbunden sind, wobei neben dem prozessgeregelten Maschinenabläufen in der Regel servo-motorische Antriebe zum Einsatz kommen, sind im Stand der Technik hinlänglich bekannt. Die erwärmte thermoplastische Folie wird der Formstation bei geöffnetem Formwerkzeug zugeführt und nach dem Schließen der beiden Werkzeughälften bzw. von Unter- und Oberwerkzeug mittels Form- bzw. Druckluft unter Zuhilfenahme mechanischer Hilfsmittel, insbesondere in Form von pro Formnest in die Kunststoff-Folie eintauchenden Vorstreckern, in die die Formnester aufweisende untere Werkzeughälfte hinein geformt. Die Produktion wird hierbei durch beispielsweise aus der DE 34 05 156 C1 bekannte mehrreihige Formwerkzeuge erhöht, die in mehreren Reihen angeordnete Formnester bereitstellen. Wenn die Formstation als kombinierte Form-/Stanzstation ausgebildet ist, werden nach dem Formen und Abkühlen der Formteile durch eine zusätzliche Relativbewegung der Werkzeughälften zueinander die Formteile aus der Kunststoff-Folie herausgeschnitten (vergl. DE 198 15 189 C2). Anschließend öffnen sich die Werkzeughälften bzw. Unter- und Oberwerkzeug, so dass die Formteile weiteren Bearbeitungsstationen, wie zum Abstapeln, zugeführt werden können.

Bei der Herstellung von gattungsgemäßen Verpackungsartikeln für Lebensmittel wie Obst, die zumeist als Klappverpackungen oder als Schalen mit abnehmbaren Deckeln zum Schutz des Verpackungsgutes beim Transport und in der Auslage der Geschäfte Verwendung finden, schließt sich der mehrreihigen, kombinierten Form- und Stanzstation oder zwischen einer Formstation und einer nachgeschalteten, separaten Ausstanzstation außerdem eine Lochstanzstation an. In dieser werden Löcher bzw. Öffnungen, insbesondere auch in die Seitenwände der Verpackungsartikel, ausgestanzt, die zur Belüftung des Verpackungsgutes dienen.

Bei der Herstellung von gelochten Verpackungen finden je nach der Größe der Verpackung und / oder der gewünschten Stückzahl, d. h. große Serien, mittlere oder kleine Losgrößen, Thermoformautomaten mit mindestens einer nachgeschalteten Lochstanze Verwendung. Wenn nicht mit einem kombinierten Form- und Stanzwerkzeug gearbeitet wird, ergibt sich für einen Thermoformautomaten eine Produktionslinie mit vier Stationen, nämlich Formen der Artikel in der Formstation, das Stanzen der Löcher bzw. Öffnungen in der Lochstanzstation, das Ausstanzen der Kontur in der Ausstanzstation und das Abstapeln der ausgestanzten Artikel in der an letzter Stelle folgenden Stapelstation, die in der Regel als Stapel- und Zählvorrichtung ausgebildet ist. Die in der Formstation geformten Artikel, z. B. Schalen, werden mit der Folie in die sich zunächst anschließende Lochstanzstation eingebracht, in der mit dem dort angeordneten Lochstanzwerkzeug die erforderlichen Löcher ausgestanzt werden. Das Lochstanzwerkzeug besitzt in Reihen angeordnet die gleiche Anzahl an Lochstanzstempeln wie das Formwerkzeug die in entsprechenden Reihen angeordneten Formnester bzw. Kavitäten aufweist; ein solches Formwerkzeug wird kurz mehrreihiges Werkzeug genannt. Die somit beispielsweise zwei-, drei- oder vierreihigen Lochstanzwerkzeuge sind sehr teuer und erfordern zudem eine den Anforderungen durch die hohen Stanzkräfte gerecht werdende Bauweise (Gerüst, Antrieb, Fundament usw.) der Lochstanzstation.

Der Erfindung liegt daher die Aufgabe zugrunde, ein Verfahren und einen Thermoformautomat der eingangs genannten Art zu schaffen, mit denen sich die genannten Nachteile vermeiden und ein kostengünstigerer Betrieb erreichen lassen.

Diese Aufgabe wird mit einem Verfahren erfindungsgemäß dadurch gelöst, dass während der Verweildauer der Folienbahn in der Formstation von dem zuvor in die Lochstanzstation transportierten Folienabschnitt mit ausgeformten, optional am Umfang bereits ausgestanzten, Artikeln mittels eines nur einreihigen, eine der Anzahl der Formnester einer Reihe entsprechende Anzahl von Lochstanzstempeln besitzenden Lochstanzwerkzeugs in die Artikel der ersten Reihe und nach einem jeweiligen Versatzschritt des Stanzwerkzeugs in die Artikel der nachfolgenden Reihe bzw. Reihen die Löcher gestanzt werden, wobei der Lochstanztakt gegenüber dem Ausformtakt der Artikel in der Formstation abhängig von der Anzahl der Reihen des Formwerkzeugs vervielfacht wird.

Die erfindungsgemäße Kombination eines mehrreihigen Werkzeugs der Formstation mit einem einreihigen, taktend arbeitenden Lochstanzwerkzeug der Stanzstation bringt mehrere Vorteile mit sich. Der Herstellungsaufwand für ein nur einreihiges Lochstanzwerkzeug ist deutlich günstiger, wodurch sich beim Einkauf eine Kostenreduzierung ergibt. Die Lochstanzwerkzeuge unterliegen einem großen Verschleiß, so dass die Möglichkeit besteht, ein kostengünstiges, einreihiges Lochstanz-Ersatzwerkzeug vorrätig zu halten und die Stillstandzeit des Thermoformautomaten zu verringern. Weil außerdem keine so hohen Stanzkräfte mehr aufgebracht werden müssen, reduzieren sich der Aufwand und die Kosten für die Lochstanzstation.

Wenn der Thermoformautomat beispielsweise in der Formstation mit 30 Takten pro Minute und einem dreireihigen Formwerkzeug arbeitet, stanzt das einreihige Lochstanzwerkzeug der Lochstation erfindungsgemäß mindestens dreimal so schnell und absolviert somit mindestens 90 Takte pro Minute, um während der Verweildauer der Folienbahn in der Formstation auch zweimal einen Versatzschritt zu machen.

Nach vorteilhaften Vorschlägen der Erfindung kann allein das Lochstanzwerkzeug in der Lochstanzstation durch lineares Verschieben für einen nächsten Lochstanzvorgang in eine mit der zu lochenden Artikelreihe fluchtende Lage positioniert werden. Die zu beschleunigende und abzubremsende Masse ist dabei sehr viel geringer als beim optionalen linearen Verschieben der gesamten Lochstanzstation in der während der Verweildauer der Folienbahn in der Formstation zur Verfügung stehenden Zeit.

Zur Durchführung des Verfahrens wird erfindungsgemäß vorgesehen, dass die Lochstanzstation des in seiner Formstation ein mehrreihiges Formwerkzeug aufweisenden Thermoformautomaten mit einem einreihigen Lochstanzwerkzeug ausgebildet ist, wobei die Lochstanzstation oder das Lochstanzwerkzeug mit seinem Antrieb auf einer Linearführung in Richtung zur Formstation und von dieser weg verschiebbar ist. Die zahlreichen Vorteile bei Kombination eines mehrreihigen Formwerkzeugs mit einem einreihigen Lochstanzwerkzeug sind zuvor schon beschrieben worden.

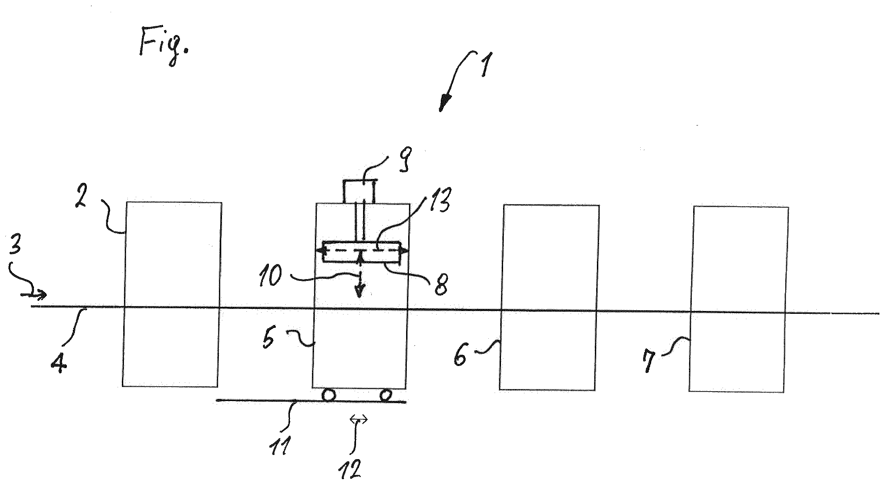

Weitere Merkmale und Einzelheiten der Erfindung ergeben sich aus den Patentansprüchen und der nachfolgenden Beschreibung eines in der einzigen Zeichnung sehr schematisch dargestellten Ausführungsbeispiels einer Prozesslinie eines Thermoformautomaten.

Ein Thermoformautomat 1 zum Herstellen von mit Belüftungslöchern versehenen tiefgezogenen, beliebigen schalen- und / oder deckelartigen Verpackungsartikeln aus thermoplastischen Kunststoff-Folien besteht hier aus einer Formstation 2, der sich in Laufrichtung 3 (Pfeil) eine von einer nicht dargestellten Rolle intermittierend abgezogenen Folienbahn 4 eine Lochstanzstation 5, eine Ausstanzstation 6 und eine Stapelstation 7 anschließt. Die Formstation ist mit einem mehrreihigen Werkzeug ausgerüstet, das in bekannter Weise aus zwei Werkzeughälften, einem Unter- und einem Oberwerkzeug besteht, von denen das Unterwerkzeug mit dem in mindestens zwei Reihen nebeneinander liegenden Formnestern bzw. Kavitäten für die zu formenden Verpackungsartikel ausgebildet ist.

Dem mehrreihigen Werkzeug der Formstation ist in der Lochstanzstation 5 ein nur einreihiges Lochstanzwerkzeug 8 zugeordnet, das zur Lochung der mit der Folienbahn 4 zugeführten, geformten Verpackungsartikel mittels eines Stanzantriebs 9 in Richtung des Doppelpfeils 10 gegen die Folienbahn 4 anstellbar und nach dem Lochstanztakt von dieser abhebbar ist. In der folgenden Ausstanzstation 6 werden die gelochten Verpackungsartikel bis auf mehrere Haltenoppen aus der Folienbahn 4 herausgeschnitten bzw. ausgestanzt und dann im Gitter an den Haltenoppen in die Stapelstation 7 transportiert, in der die Verpackungsartikel abgestapelt werden. Wenn die Formstation 2 mit einem kombinierten mehrreihigen Form- und Stanzwerkzeug ausgerüstet ist, ist es möglich, die Verpackungsartikel zugleich in der Formstation 2 am Umfang auszustanzen. Die Ausstanzstation 6 ist in diesem Fall folglich entbehrlich.

In der Arbeitsweise mit einem beispielsweise zweireihigen Werkzeug der Formstation und einem einreihigen Lochstanzwerkzeug 8 der nachgeschalteten Lochstanzstation 5, wobei die Reihe sich quer zur Laufrichtung 3 der Folienbahn 4 erstreckend versteht, werden in der Formstation 2 zwei Reihen der Verpackungsartikel geformt. Nach dem Formprozess werden bei geöffnetem Formwerkzeug die geformten Verpackungsartikel mit der Folienbahn 4 in die Lochstanzstation 5 transportiert, wobei gleichzeitig ein neuer Folienabschnitt in die Formstation 2 einläuft. Während der Verweildauer der Folienbahn in der Formstation 2 stanzt das Lochstanzwerkzeug 8 der Lochstanzstation 5 die Löcher zunächst in die erste Reihe mit den Verpackungsartikeln und dann nach einem Versatzschritt in die zweite Reihe der Verpackungsartikel, wobei der Takt des Lochstanzwerkzeugs 8 doppelt so hoch wie der Takt des Formwerkzeugs in der Formstation 2 ist, somit 60 Takte pro Minute gegenüber 30 Takten des Formwerkzeugs beträgt.

Um während der Verweildauer der Folienbahn 4 in der Formstation 2 beim sukzessiven Lochstanzen der zugeführten Reihen mit den Verpackungsartikeln den Versatzschritt bzw. Indexversatz durchführen zu können, kann entweder die gesamte Lochstanzstation 5 auf einer angedeuteten Linearführung 11 gemäß Doppelpfeil 12 oder allein das Lochstanzwerkzeug 8 in dem Gerüst der Lochstanzstation 5, wie mit dem gestrichelten Doppelpfeil 13 angedeutet, in Richtung zur Formstation 2 und von dieser wieder weg verfahren bzw. -schoben werden. In jedem Fall geschieht das Lochen der geformten Verpackungsartikel mit einem gegenüber dem Ausformtakt in der Formstation abhängig von der Anzahl der Reihen des Formwerkzeugs vervielfachten Takt.

### Bezugszeichenliste

- 1: Thermoformautomat
- 2: Formstation
- 3: Laufrichtung (Pfeil)
- 4: Folienbahn
- 5: Lochstanzstation
- 6: Ausstanzstation
- 7: Stapelstation
- 8: Lochstanzwerkzeug
- 9: Stanzantrieb
- 10: Doppelpfeil
- 11: Linearführung
- 12: Doppelpfeil (Verfahrbewegung der Lochstanzstation)
- 13: Doppelpfeil (Verfahrbewegung des Lochstanzwerkzeugs)

## Patentansprüche

1. Verfahren zum Betreiben eines Thermoformautomaten beim Herstellen von mit Belüftungslöchern versehenen tiefgezogenen, beliebigen schalen- und / oder deckelartigen Verpackungsartikeln aus thermoplastischen Kunststoff-Folien, die zum Formen, Stanzen und Stapeln der Artikel über einen intermittierenden Folientransport einer Formstation sowie sich daran anschließend einer Lochstanzstation und einer Stapelstation, optional mit einer Ausstanzstation zwischen dem Lochstanzen und dem Stapeln, zugeführt werden, wobei in der Formstation ein zum vertikalen Öffnen und Schließen ausgebildetes, aus einem Oberwerkzeug und einem Unterwerkzeug bestehendes Formwerkzeug angeordnet ist, von denen das Unterwerkzeug mit in mindestens zwei Reihen vorgesehenen Formnestern ausgebildet ist,
**dadurch gekennzeichnet,**
**dass** während der Verweildauer der Folienbahn in der Formstation von dem zuvor in die Lochstanzstation transportierten Folienbahnabschnitt mit ausgeformten, optional am Umfang bereits ausgestanzten, Artikeln mittels eines nur einreihigen, eine der Anzahl der Formnester einer Reihe entsprechende Anzahl von Lochstanzstempeln besitzenden Lochstanzwerkzeugs in die Artikel der ersten Reihe und nach einem jeweiligen Versatzschritt des Lochstanzwerkzeugs in die Artikel der nachfolgenden Reihe bzw. Reihen die Löcher gestanzt werden, wobei der Lochstanztakt gegenüber dem Ausformtakt der Artikel in der Formstation abhängig von der Anzahl der Reihen des Formwerkzeugs vervielfacht wird.

2. Verfahren nach Anspruch 1,
**dadurch gekennzeichnet,**
**dass** das Lochstanzwerkzeug durch lineares Verschieben für einen nächsten Lochstanzvorgang in einer mit einer zu lochenden Artikelreihe fluchtenden Lage positioniert wird.

3. Verfahren nach Anspruch 1,
**dadurch gekennzeichnet,**
**dass** die Lochstanzstation linear verschoben und mit ihrem Lochstanzwerkzeug in einer mit einer zu lochenden Artikelreihe fluchtenden Lage positioniert wird.

4. Thermoformautomat (1) zum Herstellen von mit Belüftungslöchern versehenen tiefgezogenen, beliebigen schalen- und / oder deckelartigen Verpackungsartikeln aus thermoplastischen Kunststoff-Folien (4), die zum Formen, Stanzen und Stapeln der Artikel über einen intermittierenden Folientransport einer Formstation (2) sowie sich daran anschließend einer Lochstanzstation (5) und einer Stapelstation (7), optional mit einer Ausstanzstation (6) zwischen dem Lochstanzen und dem Stapeln, zugeführt werden, wobei in der Formstation (2) ein zum vertikalen Öffnen und Schließen ausgebildetes, aus einem Oberwerkzeug und einem Unterwerkzeug bestehendes Formwerkzeug angeordnet ist, von denen das Unterwerkzeug mit in mindestens zwei Reihen vorgesehenen Formnestern ausgebildet ist,
**dadurch gekennzeichnet,**
**dass** die Lochstanzstation (5) mit einem einreihigen Lochstanzwerkzeug (8) ausgebildet ist, wobei die Lochstanzstation (5) oder das Lochstanzwerkzeug (8) auf einer Linearführung (11) bzw. (13) in Richtung zur Formstation (2) und von dieser weg verschiebbar ist.

## Claims

1. A method for operating a thermoforming machine during the production of any desired shell- and/or lid-like deep-drawn packaging items made from thermoplastic plastic films and provided with ventilation holes, which, for moulding, stamping and stacking of the items, are supplied by means of an intermittent film transport to a moulding station and a hole-punching station adjacent thereto and a stacking station, optionally with a stamping station between the hole punching and the stacking, a mould constructed for vertical opening and closing and consisting of an upper mould and a lower mould being arranged in the moulding station, of which the lower mould is constructed with mould cavities provided in at least two rows,
**characterized in**
**that** during the dwell time of the film web in the moulding station, the holes are punched from the film-web section, previously transported into the hole-punching station and having items optionally already stamped at the periphery, by means of an only single-row hole-punching tool, having a number of hole-punching dies corresponding to the number of mould cavities of a row, into the items of the first row and following a respective offset step of the hole-punching tool, into the items of the following row or rows, wherein the hole-punching rate is multiplied compared to the moulding rate of the items in the moulding station as a function of the number of rows of the mould.

2. The method according to claim 1,
**characterized in**
**that** the hole-punching tool is positioned by means of linear displacement, for a next hole-punching procedure, in a position flush with an item row to be punched.

3. The method according to claim 1,
**characterized in**
**that** the hole-punching station is displaced linearly and positioned by way of the hole-punching tool thereof in a position flush with an item row to be punched.

4. A thermoforming machine (1) for producing any desired shell- and/or lid-like deep-drawn packaging items made from thermoplastic plastic films (4) and provided with ventilation holes, which, for moulding, stamping and stacking of the items, are supplied by means of an intermittent film transport to a moulding station (2) and a hole-punching station (5) adjacent thereto and a stacking station (7), optionally with a stamping station (6) between the hole punching and the stacking, a mould constructed for vertical opening and closing and consisting of an upper mould and a lower mould being arranged in the moulding station (2), of which the lower mould is constructed with mould cavities provided in at least two rows,
**characterized in**
**that** the hole-punching station (5) is constructed with a single-row hole-punching tool (8), wherein the hole-punching station (5) or the hole-punching tool (8) can be displaced on a linear guide (11) or (13) in the direction towards the moulding station (2) and away from the same.

## Revendications

1. Procédé destiné à faire fonctionner un automate de thermoformage lors de la fabrication d'articles d'emballage emboutis quelconques, en forme de coques et/ou de couvercles, munis de trous d'aération, en films en matière thermoplastique qui pour le formage, l'estampage et l'empilage des articles sont amenés par l'intermédiaire d'un transport intermittent de film vers un poste de formage, ainsi que dans la continuité de celui-ci, vers un poste de poinçonnage et un poste d'empilage, en option avec un poste d'estampage entre le poinçonnage et l'empilage, au poste de formage étant placé un outil de moulage, conçu pour une ouverture et une fermeture verticales, constitué d'un outil supérieur et d'un outil inférieur, dont l'outil inférieur est conçu avec des cavités de moulage, prévues sur au moins deux rangées,
**caractérisé en ce**
**que** pendant la durée de séjour du lé de film dans le poste de formage, à partir du coupon de lé de film préalablement transporté au poste de poinçonnage, avec des articles façonnés, en option déjà estampés sur la périphérie, au moyen d'un outil de poinçonnage à une seule rangée, comportant un nombre de poinçons correspondant au nombre de cavités de moulage, les trous sont estampés dans les articles de la première rangée et après une étape respective de décalage de l'outil de poinçonnage, dans les articles de la ou des rangée(s) suivante(s), la cadence de poinçonnage étant multipliée par rapport à la cadence de façonnage des articles dans le poste de formage, en fonction du nombre des rangées de l'outil de formage.

2. Procédé selon la revendication 1,
**caractérisé en ce**
**que** par un déplacement linéaire, l'outil de poinçonnage est positionné pour une opération de poinçonnage suivante dans une position alignée sur une rangée d'articles à poinçonner.

3. Procédé selon la revendication 1,
**caractérisé en ce**
**que** le poste de poinçonnage est déplacé de manière linéaire et positionné par son outil de poinçonnage dans une position alignée sur une rangée d'articles à poinçonner.

4. Automate de thermoformage (1), destiné à fabriquer des articles d'emballage emboutis quelconques, en forme de coques et/ou de couvercles, munis de trous d'aération, en films en matière thermoplastique (4), qui pour le formage, l'estampage et l'empilage des articles sont amenés par l'intermédiaire d'un transport intermittent de film vers un poste de formage (2), ainsi que dans la continuité de celui-ci, vers un poste de poinçonnage (5) et un poste d'empilage (7), en option avec un poste d'estampage (6) entre le poinçonnage et l'empilage, au poste de formage (2) étant placé un outil de moulage, conçu pour une ouverture et une fermeture verticales, constitué d'un outil supérieur et d'un outil inférieur, dont l'outil inférieur est conçu avec des cavités de moulage, prévues sur au moins deux rangées,
**caractérisé en ce**
**que** le poste de poinçonnage (5) est conçu avec un outil de poinçonnage (8) à une rangée, le poste de poinçonnage (5) ou l'outil de poinçonnage (8) étant déplaçable sur un guidage linéaire (11) ou (13) dans la direction vers le poste de formage (2) et en éloignement de celui-ci.
